# EUROPEAN PATENT SPECIFICATION

(11) **EP 3 231 499 B1**
(45) Date of publication and mention of the grant of the patent: **14.04.2021**
(21) Application number: 15867542.1
(22) Date of filing: 16.09.2015
(51) Int. Cl.: B01D 53/86, B01J 23/68, F23G 7/07, B01D 53/94

(54) **GAS ENGINE POWER GENERATION SYSTEM AND EXHAUST GAS TREATMENT METHOD**
GASMOTORSTROMERZEUGUNGSSYSTEM UND ABGASBEHANDLUNGSVERFAHREN
SYSTÈME DE PRODUCTION D'ÉNERGIE À MOTEUR À GAZ ET PROCÉDÉ DE TRAITEMENT DE GAZ D'ÉCHAPPEMENT

(30) Priority: 11.12.2014 JP 2014251062
(43) Date of publication of application: 18.10.2017
(60) Divisional application: 21159439.5
(73) Proprietor: Mitsubishi Heavy Industries, Ltd., Tokyo 108-8215 (JP)
(72) Inventor: KATSUKI, Masatoshi, Tokyo 108-8215 (JP); FUJII, Shuuji, Tokyo 108-8215 (JP); NISHIZAWA, Kazuki, Tokyo 108-8215 (JP)
(74) Representative: Henkel & Partner mbB
(86) International application number: PCT/JP2015/076322
(87) International publication number: WO 2016/092931

(56) References cited:
- JP-A- H06 182 201
- JP-A- 2004 041 868
- JP-A- 2012 047 096
- JP-A- 2014 161 779
- JP-A- 2015 136 684
- JP-A- 2015 136 684
- US-A1- 2005 245 391
- US-A1- 2010 215 558
- US-A1- 2014 090 374

## Description

### TECHNICAL FIELD

The present disclosure relates to a gas engine power generation system, and an exhaust gas treatment method.

### BACKGROUND ART

As described in Patent Document 1, a platinum-supported alumina is used as a catalyst for oxidation removal of aldehyde, which is a non-combusted product of fuel, formaldehyde in particular, from exhaust gas of a gas turbine or a gas engine.

Furthermore, Patent Document 2 discloses an oxidation catalyst having a composition expressed by a general expression Y₁₋ₓAgₓMnO₃ (0.01≤x≤0.15), as an oxidation catalyst for oxidizing contents of exhaust gas of an internal combustion engine, such as particulates or high-boiling carbon hydrate.

Similarly, Patent Document 3 discloses a catalyst comprising a porous solid of a mixture of a composite metal oxide having a composition expressed by a general expression Y_{0.95}Ag_{0.05}MnO₃ and oxidized zirconium, as an oxidation catalyst for particulates contained in exhaust gas of an internal combustion engine

Patent Document 4 describes an exhaust gas treatment device for internal combustion engine, gasoline engine, natural gas engine, used in mobile or in stationary applications such as electrical power generators.

### Citation List

### Patent Literature

Patent Document 1: 2005-319393A
Patent Document 2: JP4689574B
Patent Document 3: JP5095538B
Patent Document 4: US2014090374

### SUMMARY

### Problems to be Solved

A catalyst of platinum-supported alumina is costly for platinum is expensive, and it is desirable to develop another catalyst capable of removing volatile organic compound (VOC) such as formaldehyde.

In this regard, Patent Documents 2 and 3 do not mention the function of a composite oxide containing Y and Ag to remove formaldehyde.

An object of at least one embodiment of the present invention is to provide a gas engine power generation system according to claim 1, and an exhaust gas treatment method according to claim 3, having an excellent VOC removing performance.

### Solution to the Problems

The present inventors conducted various researches to develop a novel exhaust gas treatment catalyst (see JP2015136684) having an excellent performance of oxidizing VOC, formaldehyde in particular, to find that Ag (silver) and Dy (dysprosium) are promising as the elements of A site, and arrived at the present invention.

An exhaust gas treatment device according to present disclosure is capable of treating exhaust gas of a gas turbine or a gas engine, and comprises an exhaust gas treatment catalyst comprising a perovskite composite oxide containing at least Ag and Dy in an A site and at least Mn in a B site.

The above exhaust gas treatment device includes an exhaust gas treatment catalyst which includes a perovskite composite oxide containing at least Ag and Dy in the A site, and at least Mn in the B site, and thus has a high performance of oxidization removal of VOC such as formaldehyde.

In particular, a perovskite composite oxide containing at least Ag and Dy in the A site and at least Mn in the B site has a higher VOC removing performance at a low temperature than a catalyst of platinum-supported alumina. Thus, with the above exhaust gas treatment device it is possible to remove VOC efficiently even when exhaust gas has a low temperature. Thus, it is possible to remove VOC more efficiently than typical art during startup of a gas turbine or a gas engine.

While Ag is also a precious metal, Ag is less expensive than Pt, in the proportion of approximately one to seventy. Thus, the above described exhaust gas treatment device is less expensive than an exhaust gas treatment device including platinum as a main precious metal component. In particular, if the gas turbine or the gas engine is of a large type for power generation, the exhaust gas treatment device requires a great amount of precious metal, and thus it is extremely advantageous to use Ag instead of Pt as a precious metal in terms of price.

In some non-claimed embodiments, the exhaust gas treatment device further comprises: a heat exchanger capable of recovering heat from exhaust gas of the gas turbine.

With the above configuration it is possible to utilize heat of exhaust gas effectively by recovering heat of exhaust gas with a heat exchanger. In particular, a perovskite composite oxide containing at least Ag and Dy in the A site and at least Mn in the B site has an excellent low-temperature activation property. Thus, the temperature of exhaust gas may decrease more than typical art at a heat exchanger upstream of the exhaust gas treatment catalyst. Thus, while heating steam with high efficiency by utilizing high-temperature exhaust gas, it is possible to remove VOC from low-temperature exhaust gas efficiently.

The perovskite composite oxide has a composition expressed by a general expression Ag_{α}Dy_{1-α}MnO₃ (0.01≤α≤0.20).

In some embodiments, the perovskite composite oxide has a composition expressed by a general expression Ag_{0.12}Dy_{0.88}MnO₃.

A gas turbine combined cycle power generation system according to a non-claimed embodiment of the present disclosure comprises: a gas turbine; a steam turbine; at least one generator capable of generating electric power from power of the gas turbine and the steam turbine; and an exhaust gas treatment device capable of treating exhaust gas of the gas turbine. The exhaust gas treatment device includes: an exhaust gas treatment catalyst comprising a perovskite composite oxide containing at least Ag and Dy in an A site and at least Mn in a B site; and a heat exchanger disposed upstream of the exhaust gas treatment catalyst in a flow direction of the exhaust gas, the heat exchanger being capable of performing heat exchange between the exhaust gas and steam to be supplied to the steam turbine.

With the above gas turbine combined cycle power generation system the exhaust gas treatment device removes VOC from exhaust gas, while heat of exhaust gas is supplied to steam, and thereby it is possible to generate power by utilizing power of a steam turbine.

Especially, since the exhaust gas treatment device includes a perovskite composite oxide which is highly active under a low temperature, it is possible to remove VOC efficiently even if exhaust gas has a low temperature during startup of a gas turbine combined cycle power generation system. Furthermore, a perovskite composite oxide containing at least Ag and Dy in the A site and at least Mn in the B site has an excellent low-temperature activation property. Thus, the temperature of exhaust gas may decrease more than typical art at a heat exchanger upstream of the exhaust gas treatment catalyst in the flow direction of exhaust gas. Thus, while heating steam with high efficiency by utilizing high-temperature exhaust gas, it is possible to remove VOC from low-temperature exhaust gas efficiently.

As a result, the above-described gas turbine combined cycle power generation system discharges low-VOC exhaust gas from the exhaust gas treatment device, and has a high thermal efficiency, thus being environmentally friendly.

A gas engine power generation system according to at least one embodiment of the present invention comprises: a gas engine; a generator capable of generating electric power from power of the gas engine; a turbocharger capable of compressing air to be supplied to the gas engine; and an exhaust gas treatment device capable of treating exhaust gas of the gas engine. The exhaust gas treatment device includes an exhaust gas treatment catalyst comprising a perovskite composite oxide containing at least Ag and Dy in an A site and at least Mn in a B site, the perovskite composite oxide being represented by the general formula Ag_{α}Dy_{1-α} MnO₃, wherein 0.01≤a≤0.20. The turbocharger includes an exhaust turbine disposed in an exhaust gas flow passage extending between the gas engine and the exhaust gas treatment device.

With the above gas turbine combined cycle power generation system the exhaust gas treatment device removes VOC from exhaust gas. Especially, since the perovskite composite oxide is highly active under a low temperature, it is possible to remove VOC efficiently even if exhaust gas has a low temperature during startup of a gas engine power generation system. Furthermore, a perovskite composite oxide containing at least Ag and Dy in the A site and at least Mn in the B site has an excellent low-temperature activation property. Thus, the temperature of exhaust gas may decrease more than typical art in the turbocharger. Accordingly, while converting thermal energy of high-temperature exhaust gas to power efficiently with the turbocharger, it is possible to remove VOC from low-temperature exhaust gas.

As a result, the above-described gas engine power generation system discharges low-VOC exhaust gas from the exhaust gas treatment device, and has a high thermal efficiency, thus being environmentally friendly.

A method of treating exhaust gas according to at least one embodiment of the present invention comprises: an exhaust gas treatment step of causing exhaust gas discharged from a gas engine to make contact with an exhaust gas treatment catalyst comprising a perovskite composite oxide containing at least Ag and Dy in an A site and at least Mn in a site, the perovskite composite oxide being represented by the general formula Ag_{α}Dy_{1-α}MnO₃, wherein 0.01≤α≤0.20, which has a high performance of oxidization removal of VOC such as formaldehyde.

In particular, a perovskite composite oxide containing at least Ag and Dy in the A site and at least Mn in the B site has a higher VOC removing performance at a low temperature than a catalyst of platinum-supported alumina. Thus, according to the above exhaust-gas treatment method it is possible to remove VOC efficiently even when exhaust gas has a low temperature. Thus, it is possible to remove VOC more efficiently than typical art during startup of a gas turbine or a gas engine.

The method of treating exhaust gas further comprises a supercharging step of rotating an exhaust turbine of a turbocharger with the exhaust gas discharged from the gas engine, and compressing air to be supplied to the gas engine with a compressor of the turbocharger, before the exhaust gas treatment step.

In the above described exhaust gas treatment method a perovskite composite oxide containing at least Ag and Dy in the A site and at least Mn in the B site has an excellent low-temperature activation property. Thus, the temperature of exhaust gas may decrease more than typical art in the supercharging step. Thus, according to the above described exhaust gas treatment method, while converting thermal energy of high-temperature exhaust gas to power efficiently with the turbocharger, it is possible to remove VOC from low-temperature exhaust gas efficiently.

### Advantageous Effects

According to some embodiments of the present invention, provided is an exhaust gas treatment device, a gas turbine combined cycle power generation system, a gas engine power generation system, and an exhaust gas treatment method, having an excellent VOC removing performance.

### BRIEF DESCRIPTION OF DRAWINGS

FIG. 1 is a schematic configuration diagram of a GTCC power generation system.
FIG. 2 is a schematic flowchart of an example of steps of an exhaust gas treatment method performed by a waste heat recovery boiler of the GTCC power generation system in FIG. 1.
FIG. 3 is a schematic configuration diagram of a gas engine power generation system according to an embodiment of the present invention.
FIG. 4 is a schematic flowchart of an example of steps of an exhaust gas treatment method performed by the gas engine power generation system in FIG. 3.
FIG. 5 is a schematic flowchart of an example of steps of a method of producing a perovskite composite oxide.
FIG. 6 is a graph showing temperature dependency of the HCHO removal rate in an embodiment and a comparative example.
FIG. 7 is a graph showing temperature dependency of the NO₂ production rate in an embodiment and a comparative example.

### DETAILED DESCRIPTION

Embodiments of the present invention will now be described in detail with reference to the accompanying drawings. It is intended, however, that unless particularly specified, dimensions, materials, shapes, relative positions and the like of components described in the embodiments shall be interpreted as illustrative only and not intended to limit the scope of the present invention.

For instance, an expression of relative or absolute arrangement such as "in a direction", "along a direction", "parallel", "orthogonal", "centered", "concentric" and "coaxial" shall not be construed as indicating only the arrangement in a strict literal sense, but also includes a state where the arrangement is relatively displaced by a tolerance, or by an angle or a distance whereby it is possible to achieve the same function.

For instance, an expression of an equal state such as "same" "equal" and "uniform" shall not be construed as indicating only the state in which the feature is strictly equal, but also includes a state in which there is a tolerance or a difference that can still achieve the same function.

Further, for instance, an expression of a shape such as a rectangular shape or a cylindrical shape shall not be construed as only the geometrically strict shape, but also includes a shape with unevenness or chamfered corners within the range in which the same effect can be achieved.

On the other hand, an expression such as "comprise", "include", "have", "contain" and "constitute" are not intended to be exclusive of other components.

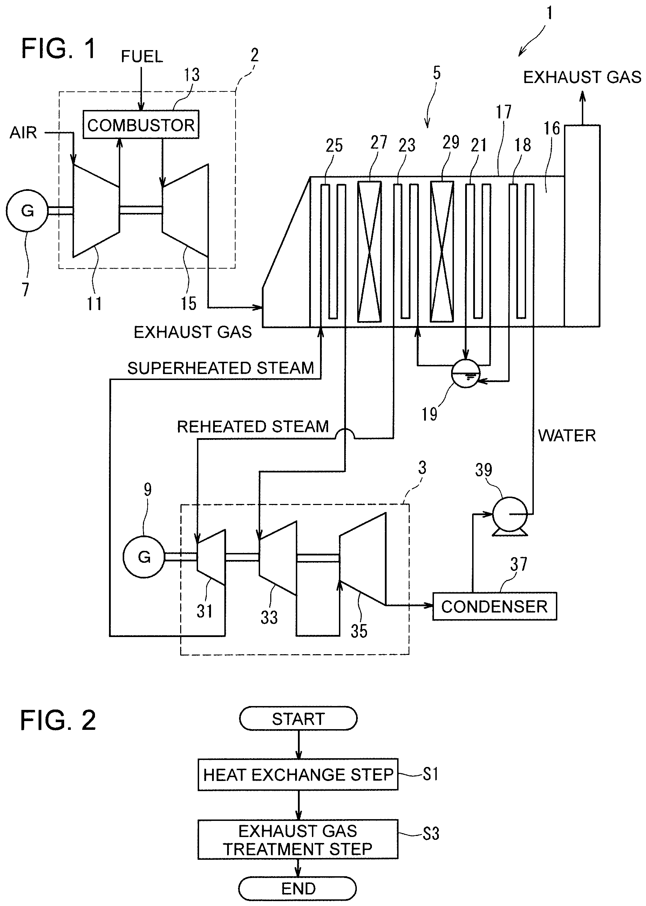

FIG. 1 is a schematic configuration diagram of a gas turbine combined cycle (GTCC) power generation system according to non-claimed embodiment of the present disclosure.

The GTCC power generation system 1 is a combined power generation system, including a gas turbine 2, a steam turbine 3, a waste heat recovery boiler 5, and generators 7, 9.

The GTCC power generation system may be for business use or home use.

The gas turbine 2 includes a compressor 11, a combustor 13, and a turbine 15. The compressor 11 compresses air by utilizing a part of the output of the turbine 15, and compressed air is supplied to the combustor 13. The combustor 13 is supplied with compressed air and fuel, and fuel is combusted. Combustion gas produced by combustion of fuel is supplied to the turbine 15, and the turbine 15 outputs power by utilizing combustion gas. The turbine 15 is connected to the generator 7, and the generator 7 generates power by utilizing a part of the power of the turbine 15.

Combustion gas (hereinafter, also referred to as exhaust gas) having performed work in the turbine 15 is supplied to the waste heat recovery boiler 5. The waste heat recovery boiler 5 serves as an exhaust gas treatment device for treating and purifying exhaust gas, and also as a heat exchanging device for generating steam by utilizing heat (waste heat) of exhaust gas.

For instance, the waste heat recovery boiler 5 includes a housing 17 having an exhaust gas flow passage 16 inside thereof, an economizer 18, a header 19, an evaporator 21, a super-heater 23, and a re-heater 25. The economizer 18, the evaporator 21, the super-heater 23, and the re-heater 25 are disposed in the exhaust gas flow passage 16, serving as a heat exchanger that performs heat exchange between exhaust gas and water (steam). Water is heated by the economizer 18, the evaporator 21, and the re-heater 23, and thereby superheated steam is obtained.

Furthermore, the waste heat recovery boiler 5 includes an oxidation catalyst device 27 and a denitration device 29 disposed in the exhaust gas flow passage 16 inside the housing 17, serving as an exhaust gas treatment device for purifying exhaust gas that flows through the exhaust gas flow passage 16. The denitration device 29 includes a selective catalytic reduction (SCR) catalyst, and has a function to remove NOx from exhaust gas. The oxidation catalyst device 27 will be described later.

Superheated steam produced by the waste heat recovery boiler 5 is supplied to the steam turbine 3. The steam turbine 3 is connected to the generator 9 and outputs power by utilizing steam. The generator 9 generates power by utilizing the power of the steam turbine 3.

For instance, the steam turbine 3 includes a high-pressure turbine 31, a mid-pressure turbine 33, and a low-pressure turbine 35. Each of the high-pressure turbine 31, the mid-pressure turbine 33, and the low-pressure turbine 35 outputs power by utilizing steam. The superheated steam performs work in the high-pressure turbine 31, and is temporarily returned to the waste heat recovery boiler 5, before being supplied to the re-heater 25. The re-heater 25 heats steam, and the heated steam is supplied to the mid-pressure turbine 33 of the steam turbine 3.

A condenser 37 is connected to the low-pressure turbine 35, and the steam discharged from the low-pressure turbine 35 of the steam turbine 3 is condensed by the condenser 37 to turn into water. The condenser 37 is connected to the waste heat recovery boiler 5 via a condenser pump 39, and the condenser pump 39 supplies water obtained by the condenser 37 to the economizer 18 of the waste heat recovery boiler 5.

The above described oxidation catalyst device 27 of the waste heat recovery boiler is disposed in a section of the exhaust gas flow passage 16 extending between the re-heater 25 and the super-heater 23, for instance. The oxidation catalyst device 27 includes a carrier and a catalyst supported by the carrier (hereinafter, the catalyst is also referred to as an oxidation catalyst or an exhaust gas treatment catalyst). For instance, the carrier has a metal or ceramic honeycomb structure.

The oxidation catalyst includes a perovskite composite oxide containing at least Ag (silver) and Dy (dysprosium) in the A site, and at least Mn (manganese) in the B site. If the perovskite composite oxide has the cubical crystal system, the A site is positioned at the corner of a unit cell, the B site at the body center of the unit cell, and oxygen at the plane center of the unit cell. The crystal system is not limited to cubical.

The waste heat recovery boiler 5, which is the exhaust gas treatment device for the above described GTCC power generation system 1, has an exhaust gas treatment catalyst which includes a perovskite composite oxide containing at least Ag and Dy in the A site, and at least Mn in the B site, and thus has a high performance of oxidization removal of VOC such as formaldehyde.

In particular, a perovskite composite oxide containing at least Ag and Dy in the A site and at least Mn in the B site has a higher VOC removing performance at a low temperature than a catalyst of platinum-supported alumina. Thus, with the waste heat recovery boiler 6, it is possible to remove VOC efficiently even when exhaust gas has a low temperature. Thus, it is possible to remove VOC more efficiently than typical art during startup of the gas turbine 2.

While Ag is also a precious metal, Ag is less expensive than Pt, in the proportion of approximately one to seventy. Thus, the waste heat recovery boiler 5 is less expensive than an exhaust gas treatment device including platinum as a main precious metal component. In particular, if the gas turbine 2 is of a large type for power generation, the waste heat recovery boiler 5 requires a great amount of precious metal, and thus it is extremely advantageous to use Ag instead of Pt as a precious metal in terms of price.

Furthermore, the above described waste heat recovery boiler 5 can utilize heat of exhaust gas by recovering heat of exhaust gas with a heat exchanger. In particular, a perovskite composite oxide containing at least Ag and Dy in the A site and at least Mn in the B site has an excellent low-temperature activation property. Thus, the temperature of exhaust gas may decrease more than typical art at a heat exchanger upstream of the oxidation catalyst device 27 in the flow direction of exhaust gas. Thus, while heating steam with high efficiency by utilizing high-temperature exhaust gas, it is possible to remove VOC from low-temperature exhaust gas efficiently.

As a result, the GTCC power generation system 1 discharges low-VOC exhaust gas from the waste heat recovery boiler 5, and has a high thermal efficiency, thus being environmentally friendly.

In the waste heat recovery boiler 5 in FIG. 1, the oxidation catalyst device 27 is disposed in a section of the exhaust gas flow passage 16 extending between the re-heater 25 and the super-heater 23. However, the oxidation catalyst device 27 may be disposed in a section of the exhaust gas flow passage 16 extending between the re-heater 23 and the evaporator 21.

FIG. 2 is a schematic flowchart of an example of steps of an exhaust gas treatment method performed by the waste heat recovery boiler 5 of the GTCC power generation system in FIG. 1.

As shown in FIG. 2, the exhaust gas treatment method comprises a heat exchange step S1 of causing exhaust gas to contact the re-heater 25 serving as a heat exchanger and recovering heat of exhaust gas, and an exhaust gas treatment step S3 of causing exhaust gas to contact an exhaust gas treatment catalyst including a perovskite composite oxide containing at least Ag and Dy in the A site and at least Mn in the B site, after the heat exchange step S1.

The above described exhaust gas treatment method includes a step of causing exhaust gas to contact an exhaust gas treatment catalyst which includes a perovskite composite oxide containing at least Ag and Dy in the A site, and at least Mn in the B site, and thus has a high performance of oxidization removal of VOC such as formaldehyde.

In particular, a perovskite composite oxide containing at least Ag and Dy in the A site and at least Mn in the B site has a higher VOC removing performance at a low temperature than a catalyst of platinum-supported alumina. Thus, according to the above described exhaust gas treatment method, it is possible to remove VOC efficiently even when exhaust gas has a low temperature. Thus, it is possible to remove VOC more efficiently than typical art during startup of the gas turbine 2.

Furthermore, in the above described exhaust gas treatment method, a perovskite composite oxide containing at least Ag and Dy in the A site and at least Mn in the B site has an excellent low-temperature activation property. Thus, the temperature of exhaust gas may decrease more than typical art in the heat exchange step S1. Thus, according to the above described exhaust-gas treatment method, while recovering heat with high efficiency from high-temperature exhaust gas, it is possible to remove VOC from low-temperature exhaust gas efficiently.

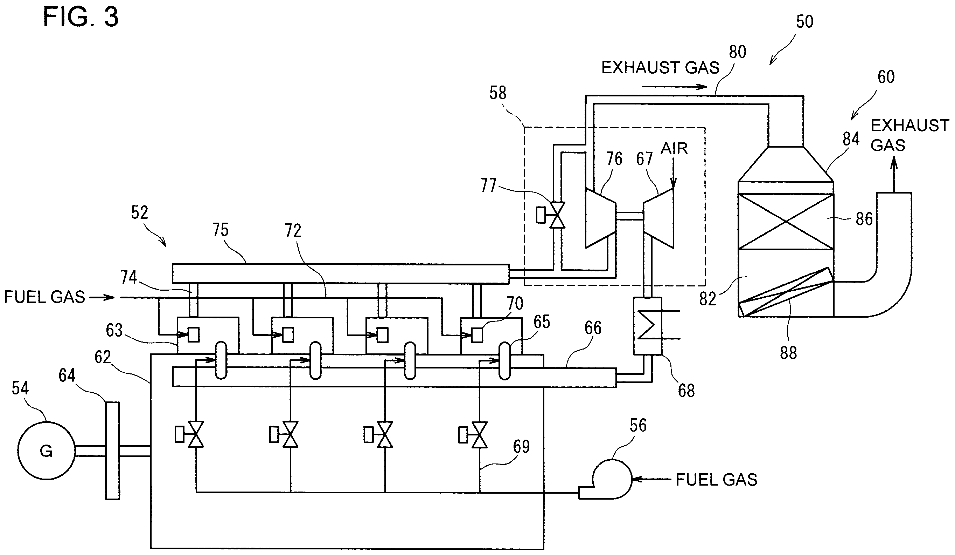

FIG. 3 is a schematic configuration diagram of a gas engine power generation system according to an embodiment of the present invention.

As shown in FIG. 3, the gas engine power generation system 50 includes a gas engine 52, a generator 54, a gas compressor 56, a turbocharger 58, and an exhaust gas treatment device 60.

The gas engine 52 is an engine powered by gas fuel such as natural gas, for instance, including a cylinder block 62, a cylinder head 63, and a flywheel 64. The generator 54 is connected to the flywheel 64. The generator 54 can generate power by utilizing power outputted by the gas engine 52.

A supply-air inlet of each cylinder head 63 is connected to the compressor 67 of the turbocharger 58 via the supply-air branch pipe 65 and the supply-air pipe 66. A supply-air cooler 68 for cooling supply air is disposed in the supply-air pipe 66. Thus, air compressed by the compressor 67 is cooled by the supply-air cooler 68, and then supplied to a cylinder provided for the cylinder block 62 via the supply-air inlet of the cylinder head 63.

Furthermore, a gas compressor 56 is connected to the supply-air branch pipe 65 via the gas supply branch pipe 69. The gas compressor 56 supplies the cylinder with fuel gas.

Furthermore, each cylinder head 63 is provided with an ignition device 70 including a precombustion chamber, and the precombustion chamber is supplied with fuel gas via a precombustion chamber fuel gas supply pipe 72. When the ignition device 70 combusts fuel gas inside the precombustion chamber, fuel gas inside the cylinder combusts by utilizing the precombustion, and thereby a piston in the cylinder reciprocates. The reciprocal motion of the piston is converted into rotational motion via a crank mechanism, and is outputted as power.

Furthermore, an exhaust branch pipe 74 is connected to an exhaust outlet of each cylinder head 63. Each exhaust branch pipe 74 is connected to an exhaust turbine 76 of the turbocharger 58 via the exhaust pipe 75. Thus, during operation of the gas engine 52, the turbocharger 58 can compress air by utilizing exhaust gas discharged from the cylinder.

The turbocharger 58 may be provided with a bypass flow passage and a waste-gate valve 77 disposed in the bypass flow passage, to permit exhaust gas to bypass the exhaust turbine 76 for a predetermined period of time.

The exhaust turbine 76 is connected to the exhaust gas treatment device 60 via an exhaust outlet pipe 80, and exhaust gas having performed work in the exhaust turbine 76 is supplied to the exhaust gas treatment device 60.

The exhaust gas treatment device 60 includes a housing 84 including an exhaust gas flow passage 82 disposed therein, and an oxidation catalyst device 88 and a denitration device 86 disposed in the exhaust gas flow passage 82. The configurations of the denitration device 86 and the oxidation catalyst device 88 are substantially the same as the denitration device 29 and the oxidation catalyst device 27 of the GTCC power generation system 1.

The above described exhaust gas treatment device 60 includes an exhaust gas treatment catalyst which includes a perovskite composite oxide containing at least Ag and Dy in the A site, and at least Mn in the B site, and thus has a high performance of oxidization removal of VOC such as formaldehyde.

In particular, a perovskite composite oxide containing at least Ag and Dy in the A site and at least Mn in the B site has a higher VOC removing performance at a low temperature than a catalyst of platinum-supported alumina. Thus, with the exhaust gas treatment device 60, it is possible to remove VOC efficiently even when exhaust gas has a low temperature. Thus, it is possible to remove VOC more efficiently than typical art during startup of the gas engine 52.

While Ag is also a precious metal, Ag is less expensive than Pt, in the proportion of approximately one to seventy. Thus, the above described exhaust gas treatment device 60 is less expensive than an exhaust gas treatment device including platinum as a main precious metal component. In particular, if the gas engine 52 is of a large type for power generation, the exhaust gas treatment device 60 requires a great amount of precious metal, and thus it is extremely advantageous to use Ag instead of Pt as a precious metal in terms of price.

Furthermore, in the above described gas engine power generation system 50, a perovskite composite oxide containing at least Ag and Dy in the A site and at least Mn in the B site has an excellent low-temperature activation property. Thus, the temperature of exhaust gas may decrease more than typical art in the turbocharger 58. Thus, while converting thermal energy of high-temperature exhaust gas to power with high efficiency with the turbocharger 58, it is possible to remove VOC from low-temperature exhaust gas efficiently.

As a result, the above-described gas engine power generation system 50 discharges low-VOC exhaust gas from the exhaust gas treatment device 60, and has a high thermal efficiency, thus being environmentally friendly.

In the exhaust gas treatment device 60, the denitration device 86 is disposed upstream of the oxidation catalyst device 88 in the flow direction of exhaust gas. However, the oxidation catalyst device 88 may be disposed upstream of the denitration device 86.

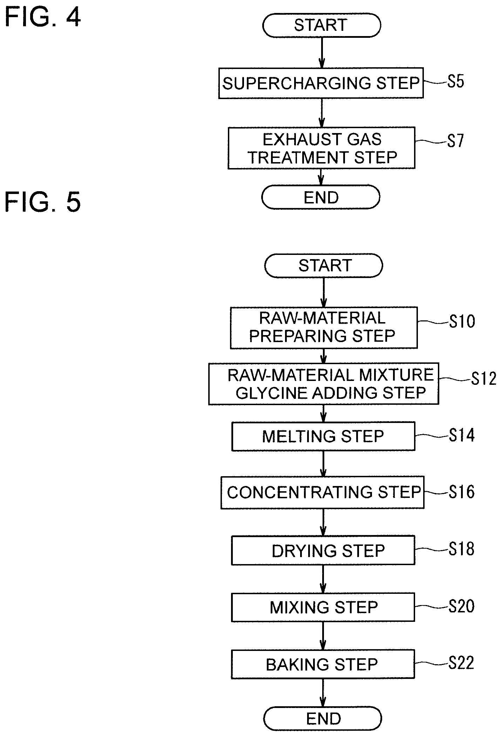

FIG. 4 is a schematic flowchart of an example of steps of an exhaust gas treatment method performed by the gas engine power generation system 50 in FIG. 3.

As shown in FIG. 2, the exhaust gas treatment method comprises a supercharging step S5 of rotating the exhaust turbine 76 of the turbocharger 58 with exhaust gas discharged from the gas engine 52 and compressing air supplied to the gas engine 52 by the compressor 67 of the turbocharger 58, and an exhaust gas treatment step S7 of causing exhaust gas to contact an exhaust gas treatment catalyst including a perovskite composite oxide containing at least Ag and Dy in the A site and at least Mn in the B site.

The above described exhaust gas treatment method includes a step of causing exhaust gas to contact an exhaust gas treatment catalyst which includes a perovskite composite oxide containing at least Ag and Dy in the A site, and at least Mn in the B site, and thus has a high performance of oxidization removal of VOC such as formaldehyde.

In particular, a perovskite composite oxide containing at least Ag and Dy in the A site and at least Mn in the B site has a higher VOC removing performance at a low temperature than a catalyst of platinum-supported alumina. Thus, according to the above described exhaust gas treatment method, it is possible to remove VOC efficiently even when exhaust gas has a low temperature. Thus, it is possible to remove VOC more efficiently than typical art during startup of the gas engine 52.

Furthermore, in the above described exhaust gas treatment method, a perovskite composite oxide containing at least Ag and Dy in the A site and at least Mn in the B site has an excellent low-temperature activation property. Thus, the temperature of exhaust gas may decrease more than typical art in the supercharging step S5. Thus, according to the above described exhaust gas treatment method, while converting thermal energy of high-temperature exhaust gas to power with high efficiency with the turbocharger 58, it is possible to remove VOC from low-temperature exhaust gas efficiently.

The perovskite composite oxide has a composition expressed by a general expression Ag_{α}Dy_{1-α}MnO₃ (0.01≤α≤0.20).

With the above configuration, the exhaust gas treatment catalyst includes a perovskite composite oxide having a composition expressed by a general expression Ag_{α}Dy_{1-α}MnO₃ (0.01≤α≤0.20), and thus has a high performance of oxidizing VOC, formaldehyde in particular.

In some embodiments, the perovskite composite oxide has a composition expressed by a general expression Ago. ₁₂Dy_{0.88}MnO₃.

With the above configuration, the exhaust gas treatment catalyst includes a perovskite composite oxide having a composition expressed by a general expression Ag_{0.12}Dy_{0.88}MnO₃, and thus has a high performance of oxidizing VOC, formaldehyde in particular.

Next, a method of producing the above described perovskite composite oxide will be described. FIG. 5 is a schematic flowchart of an example of steps of a method of producing a perovskite composite oxide.

As shown in FIG. 5, the method of producing a perovskite composite oxide includes a raw-material preparing step S10, a raw-material mixture glycine adding step S12, a melting step S14, a concentrating step S16, a drying step S18, a mixing step S20, and a baking step S22.

In the raw-material preparing step S10, raw materials are prepared. Specifically, a salt of metal containing metal atoms to constitute the A site, and a salt of metal containing metal atoms to constitute the B site are prepared. The salt of metal is nitrate or oxalate, for instance, and may be in form of solution.

In the raw-material mixture glycine adding step S12, the prepared raw materials are mixed. Specifically, a plurality of salts of metal are mixed at a predetermined ratio so that the proportion of the number of metal atoms in the plurality of salts of metal corresponds to the composition of the perovskite composite oxide to be obtained.

Furthermore, in the raw-material mixture glycine adding step S12, glycine is added while the prepared raw materials are being mixed. For instance, glycine of 16 mol is added per 1 mol of the perovskite composite oxide to be obtained.

In the melting step S14, an appropriate amount of solvent is added to the mixture of raw materials and glycine to dissolve the mixture. The solvent is pure water, for instance.

In the concentrating step S16, the mixture obtained in the melting step S14 is stirred while heated, and thereby concentrated.

In the drying step S18, the concentrate obtained in the concentrating step S16 is dried and solidified at a temperature of 100°C to 230°C.

In the mixing step S20, the solid matter obtained in the drying step S18 is fractured and mixed.

In the baking step S22, the particulate matter obtained in the mixing step S20 is baked for approximately four hours at a temperature of not less than 500°C and not more than 900°C to obtain a perovskite composite oxide.

### [Embodiment]

### 1. Production of catalyst

### -Embodiment 1

By the production method in FIG. 5, produced is an exhaust gas treatment catalyst including a perovskite composite oxide having a composition expressed by a general expression Ag_{0.12}Dy_{0.88}MnO₃. As raw materials, a silver nitrate solution, a dysprosium nitrate solution, and a manganese nitrate solution are used.

### -Comparative example 1

Prepared is an exhaust gas treatment catalyst of Al2O₃ powder supporting Pt of 2wt% (2wt%Pt/Al₂O₃).

### 2. Evaluation of exhaust gas treatment catalyst

### (1) HCHO (formaldehyde) removing performance test

The powder of exhaust gas treatment catalyst of each of embodiment 1 and comparative example 1 is formed into a lg pellet-shaped oxidation catalyst including catalyst particles of 0.5mm to 1mm. Further, test gas having the following components is prepared.

### Components of test gas

N₂: base
O₂: 10%
CO₂: 5%
H₂O: 5%
NO: 400ppm
CO: 200ppm
CH₂O:100ppm

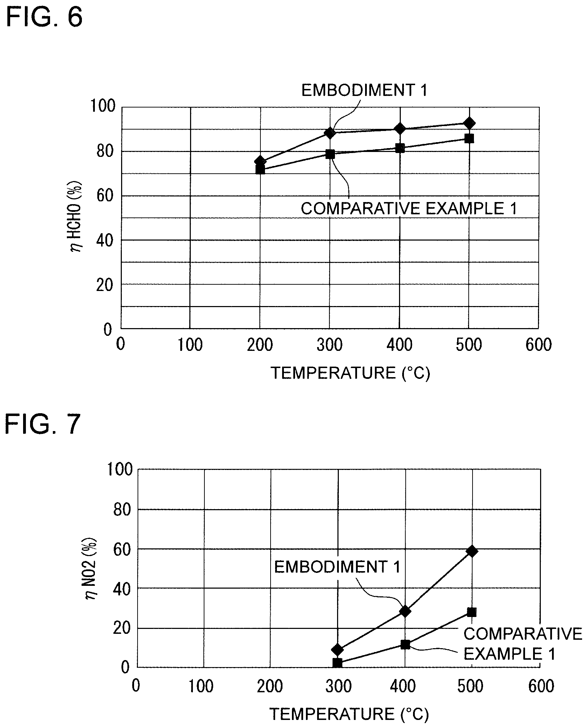

Then, the test gas is flowed through each oxidation catalyst at a flow rate of approximately 4500Ncc/min while changing the temperature, and the HCHO concentration of test gas after passing through the oxidation catalyst device is measured. Then, from the change in the HCHO concentration before and after passing through the oxidation catalyst device, the HCHO removal rate is calculated. FIG. 6 shows a relationship between the temperature of test gas after passing through the oxidation catalyst device and the HCHO removal rate (ηHCHO) in the temperature range of 200°C to 500°C. The temperature increasing speed is 20°C/min.

As shown in FIG. 6, the HCHO removal rate of the embodiment 1 is higher than the comparative example 1 in the temperature range of approximately 200°C to 500°C. Accordingly, the exhaust gas treatment catalyst including a perovskite composite oxide having a composition expressed by a general expression Ag_{0.12}Dy_{0.88}MnO₃ has a higher HCHO oxidation removal performance than Pt-supported alumina.

According to the result of comparison of the embodiment 1 and the comparative example 1, when a waste heat recovery boiler having a similar HCHO removal performance is to be produced under the same conditions, the costs of the oxidation catalyst in the embodiment 1 is approximately 61% of the cost of the oxidation catalyst of the comparative embodiment 1, and thus it is possible to cut 39% of the raw material costs of the catalyst.

Similarly, according to the result of comparison of the embodiment 1 and the comparative example 1, when an exhaust gas treatment device for a gas turbine having a similar HCHO removal performance is to be produced under the same conditions, the costs of the oxidation catalyst of the embodiment 1 is approximately 35% of the cost of the oxidation catalyst of the comparative example 1, and thus it is possible to cut 65% of the raw material costs of the catalyst.

### (2) NO₂ (nitrogen dioxide) generation performance test

Similarly to the HCHO removal performance test, the test gas is flowed through each oxidation catalyst at a flow rate of approximately 4500Ncc/min while changing the temperature, and the NO₂ concentration of test gas after passing through the oxidation catalyst is measured. From NO (nitrogen oxide) before and after passing through the oxidation catalyst device, the generation rate (conversion rate) of NO₂ is calculated. FIG 7 shows a relationship between the temperature of test gas after passing through the oxidation catalyst device and the NO₂ generation rate (ηNO₂).

As shown in FIG. 7, the NO₂ generation rate of the embodiment 1 is higher than the comparative example 1 at a temperature higher than approximately 300°C. Accordingly, the oxidation catalyst including a perovskite composite oxide having a composition expressed by a general expression Ag_{0.12}Dy_{0.88}MnO₃ has a higher NO₂ generation rate or a higher NOx oxidation performance than Pt-supported alumina.

The denitration devices 29, 86 include an SCR catalyst which reduces NO and NO₂ in the presence of ammonia. The higher the concentration of NO₂, the higher the reduction efficiency.

Specifically, while the NOx removal reaction is expressed by the following three reaction expressions (1), (2), and (3), the removal reaction of the reaction expression (2) is the fastest.

4NO+4NH₃+O₂→4N₂+6H₂O (1)

2NO+2NO₂+4NH₃→4N₂+6H₂O (2)

6NO₂+8NH₃+O₂→7N₂+12H₂O (3)

Thus, by oxidizing NO to NO₂ with the oxidation catalyst, NOx removal by the SCR catalyst is promoted.

To promote removal of NOx by the SCR catalyst, the oxidation catalyst device 88 may be disposed upstream of the denitration device 86 in the exhaust gas treatment device 60.

### Description of Reference Numerals

- 1: Gas turbine combined cycle (GTCC) power generation system
- 2: Gas turbine
- 5: Waste heat recovery boiler (exhaust gas treatment device)
- 7, 9: Generator
- 11: Compressor
- 13: Combustor
- 15: Turbine
- 16: Exhaust gas flow passage
- 17: Housing
- 18: Economizer
- 19: Header
- 21: Evaporator
- 23: Super-heater
- 25: Re-heater
- 27: Oxidation catalyst device
- 29: Denitration device
- 31: High-pressure turbine
- 33: Mid-pressure turbine
- 35: Low-pressure turbine
- 37: Condenser
- 39: Condenser pump
- 50: Gas engine power generation system
- 52: Gas engine
- 54: Generator
- 56: Gas compressor
- 58: Turbocharger
- 60: Exhaust-gas treatment device
- 62: Cylinder block
- 63: Cylinder head
- 64: Flywheel
- 65: Supply-air branch pipe
- 66: Supply-air pipe
- 67: Compressor
- 68: Supply-air cooler
- 69: Gas supply branch pipe
- 70: Ignition device
- 72: Precombustion chamber fuel gas supply pipe
- 74: Exhaust branch pipe
- 75: Exhaust pipe
- 76: Exhaust turbine
- 77: Waste-gate valve
- 80: Exhaust outlet pipe
- 82: Exhaust gas flow passage
- 84: Housing
- 86: Oxidation catalyst device
- 88: Denitration device

## Claims

1. A gas engine power generation system (50), comprising:
a gas engine (52);
a generator (54) capable of generating electric power from power of the gas engine (52);
a turbocharger (58) capable of compressing air to be supplied to the gas engine (52); and
an exhaust gas treatment device (60) capable of treating exhaust gas of the gas engine (52),
wherein the turbocharger (58) includes an exhaust turbine (76) disposed in an exhaust gas flow passage extending between the gas engine (52) and the exhaust gas treatment device (60), and
wherein the exhaust gas treatment device (60) comprises an exhaust gas treatment catalyst (88) comprising a perovskite composite oxide containing at least Ag and Dy in an A site and at least Mn in a B site, the perovskite composite oxide having a composition expressed by the general expression Ag_{α}Dy_{1-α}MnO₃ in which 0.01 ≤α≤0.20.

2. The gas engine power generation system (50) according to claim 1, wherein the perovskite composite oxide has a composition expressed by the general expression Ag_{0.12}Dy_{0.88}MnO₃.

3. A method of treating exhaust gas, comprising:
an exhaust gas treatment step of causing exhaust gas discharged from a gas engine (52) to make contact with an exhaust gas treatment catalyst (88) comprising a perovskite composite oxide containing at least Ag and Dy in an A site and at least Mn in a B site, the perovskite composite oxide having a composition expressed by the general expression Ag_{α}Dy_{1-α}MnO₃ in which 0.01 ≤α≤0.20; and
a supercharging step of rotating an exhaust turbine (76) of a turbocharger (58) with the exhaust gas discharged from the gas engine (52), and compressing air to be supplied to the gas engine with a compressor (67) of the turbocharger (58), before the exhaust gas treatment step.

## Patentansprüche

1. Gasmotorstromerzeugungssystem (50), umfassend:
einen Gasmotor (52);
einen Generator (54), welcher zur Erzeugung von elektrischer Energie aus der Energie des Gasmotors (52) imstande ist;
einen Turbolader (58), welcher zum Verdichten von dem Gasmotor (52) zuzuführender Luft imstande ist; und
eine Abgasbehandlungsvorrichtung (60), welche zur Behandlung von Abgas des Gasmotors (52) imstande ist,
wobei der Turbolader (58) eine Abgasturbine (76) umfasst, welche in einem sich zwischen dem Gasmotor (52) und der Abgasbehandlungsvorrichtung (60) erstreckenden Abgasströmungskanal angeordnet ist, und
wobei die Abgasbehandlungsvorrichtung (60) einen Abgasbehandlungskatalysator (88) umfasst, welcher ein zumindest Ag und Dy in einer A-Position und zumindest Mn in einer B-Position enthaltendes Perowskit-Verbundoxid umfasst, wobei das Perowskit-Verbundoxid eine durch den allgemeinen Ausdruck Ag_{α}Dy_{1-α}MnO₃ angegebene Zusammensetzung aufweist und 0.01≤α≤0.20 ist.

2. Gasmotorstromerzeugungssystem (50) gemäß Anspruch 1, wobei das Perowskit-Verbundoxid eine durch den allgemeinen Ausdruck Ag_{0.12}Dy_{0.88}MnO₃ angegebene Zusammensetzung aufweist.

3. Verfahren zur Behandlung von Abgas, umfassend:
einen Abgasbehandlungsschritt in Form des Inkontaktbringens eines aus einem Gasmotor (52) ausgestoßenen Abgases mit einem Abgasbehandlungskatalysator (88), welcher ein zumindest Ag und Dy in einer A-Position und zumindest Mn in einer B-Position enthaltendes Perowskit-Verbundoxid umfasst, wobei das Perowskit-Verbundoxid eine durch den allgemeinen Ausdruck Ag_{α}Dy_{1-α}MnO₃ angegebene Zusammensetzung aufweist und 0.01≤α≤0.20 ist; und
einen Aufladeschritt in Form des Indrehungversetzens einer Abgasturbine (76) eines Turboladers (58) mit dem aus dem Gasmotor (52) ausgestoßenen Abgas, sowie des Verdichtens der dem Gasmotor zuzuführenden Luft mit einem Verdichter (67) des Turboladers (58) vor dem Abgasbehandlungsschritt.

## Revendications

1. Système de génération d'électricité à moteur à gaz (50), comprenant :
un moteur à gaz (52) ;
un générateur (54) capable de générer de l'électricité à partir de l'énergie du moteur à gaz (52) ;
un turbocompresseur (58) capable de comprimer l'air devant être fourni au moteur à gaz (52) ; et
un dispositif de traitement de gaz d'échappement (60) capable de traiter le gaz d'échappement du moteur à gaz (52),
dans lequel le turbocompresseur (58) comprend une turbine d'échappement (76) disposée dans un passage d'écoulement de gaz d'échappement s'étendant entre le moteur à gaz (52) et le dispositif de traitement de gaz d'échappement (60), et
dans lequel le dispositif de traitement de gaz d'échappement (60) comprend un catalyseur de traitement de gaz d'échappement (88) comprenant un oxyde composite de perovskite contenant au moins Ag et Dy dans un site A et au moins Mn dans un site B, l'oxyde composite de perovskite ayant une composition représentée par l'expression générale Ag_{α}Dy_{1-α}MnO₃ dans laquelle 0,01< α< 0,20.

2. Système de génération d'électricité à moteur à gaz (50) selon la revendication 1, dans lequel l'oxyde composite de perovskite a une composition représentée par l'expression générale Ag_{0.12}Dy_{0,88}MnO₃.

3. Procédé de traitement d'un gaz d'échappement, comprenant :
une étape de traitement de gaz d'échappement consistant à faire venir un gaz d'échappement déchargé d'un moteur à gaz (52) en contact avec un catalyseur de traitement de gaz d'échappement (88) comprenant un oxyde composite de perovskite contenant au moins Ag et Dy dans un site A et au moins Mn dans un site B, l'oxyde composite de perovskite ayant une composition représentée par l'expression générale Ag_{α}Dy_{1-α}MnO₃ dans laquelle 0,01< a < 0,20 ; et
une étape de suralimentation consistant à faire tourner une turbine d'échappement (76) d'un turbocompresseur (58) avec le gaz d'échappement déchargé du moteur à gaz (52), et à comprimer l'air devant être fourni au moteur à gaz avec un compresseur (67) du turbocompresseur (58), avant l'étape de traitement de gaz d'échappement.
